# DEMANDE DE BREVET EUROPEEN

(11) **EP 0 841 111 A1**
(43) Date de publication de la demande: **13.05.1998**
(21) Numéro de dépôt: 97402455.6
(22) Date de dépôt: 17.10.1997
(51) Int. Cl.: B21J 7/14, B21D 15/02

(54) **Procédé d'obtention de cannelures sur un arbre**

(30) Priorité: 24.10.1996 FR 9613103
(71) Demandeur: LEMFORDER NACAM S.A., 41100 Vendome (FR)
(72) Inventeur: Sachot, Christophe, 41000 Villerable (FR); Laisement, André, 41290 La Chapelle en Cheri (FR); Chartrain, Michel, 41360 Lunay (FR)
(74) Mandataire: Martinet & Lapoux

(57) **Abrégé**

Dans un procédé d'obtention de cannelures sur un arbre, la déformation à froid sans enlèvement de copeaux s'effectue sur la face extérieure (5) d'un tube (2) de faible épaisseur. La déformation est réalisée par martelage de la face extérieure en une seule opération par l'action conjuguée et simultanée de frappe et de pétrissage. La profondeur des cannelures (1) peut atteindre la moitié de l'épaisseur du tube (2).

## Description

La présente invention est relative à un procédé d'obtention de cannelures sur un arbre. Le procédé d'obtention de cannelures sur un arbre est plus particulièrement destiné à être utilisé pour la réalisation d'arbres de colonnes de direction de véhicule automobile.

On connaît des procédés de réalisation de cannelures sur des arbres pleins par déformation. On connaît également des procédés de réalisation de cannelures sur la partie extérieure d'arbres creux relativement épais par enlèvement de matière. Le premier genre de procédé connu présente l'inconvénient de ne s'appliquer que sur des arbres pleins, lorsque l'on veut réaliser des cannelures sans enlèvement de matière. Le deuxième genre de procédé déjà utilisé présente l'inconvénient de nécessiter la réalisation des cannelures par enlèvement de copeaux, lorsqu'il est nécessaire de réaliser ces cannelures sur la partie extérieure d'un tube, qui de plus, doit être relativement épais.

Le but de la présente invention est de proposer un procédé d'obtention de cannelures sur un arbre, qui ne nécessite aucun enlèvement de copeaux, tout en pouvant s'appliquer sur la partie extérieure d'un tube ayant une épaisseur la plus faible possible. Ceci évite les inconvénients décrits ci-dessus, et contribue à une réduction du poids du tube et du prix de revient des cannelures.

Selon l'invention, le procédé d'obtention de cannelures sur un arbre, est caractérisé en ce que
- la déformation à froid sans enlèvement de copeaux s'effectue sur la face extérieure d'un tube de faible épaisseur,
- la déformation est réalisée par martelage de la face extérieure en une seule opération par l'action conjuguée et simultanée de frappe et de pétrissage,
- la profondeur des cannelures peut atteindre la moitié de l'épaisseur du tube,
- pendant l'opération de martelage, la face intérieure du tube est soutenue par un mandrin ayant des dimensions adaptées à la face intérieure dudit tube.

Avantageusement, le martelage utilise un nombre de matrices qui est un sous-multiple du nombre des cannelures à réaliser. La forme de chaque matrice a des empreintes qui sont une image des cannelures à réaliser, les empreintes ayant des angles d'entrée et de sortie.

Selon un autre aspect de l'invention, le procédé d'obtention de cannelures sur un arbre, par déformation à froid sans enlèvement de copeaux sur la face extérieure d'un tube de faible épaisseur s'effectue sur une machine comportant une couronne extérieure, qui est animée d'un mouvement de rotation coaxial au tube. Cette couronne entraîne des rouleaux presseurs, qui agissent sur des poussoirs. Des filières s'étendent radialement entre les plongeurs et la face extérieure du tube et sont équi-réparties autour du tube. Les poussoirs et filières sont supportés et guidés par un ensemble support interne fixe dans lequel les poussoirs et les filières sont montés à coulissement, chaque poussoir agissant sur la matrice correspondante. Le tube soutenu par un mandrin intérieur est introduit entre les matrices, lorsque la couronne extérieure tourne et avance lentement pendant l'opération de martelage en restant fixe en rotation. A chaque passage d'un rouleau presseur sur un poussoir, ledit rouleau presseur provoque le déplacement radial dudit poussoir, et de la matrice correspondante, afin que le mouvement radial alterné de chacune des matrices permette de réaliser les cannelures sur le tube de faible épaisseur. Cette réalisation est obtenue par l'action conjuguée et simultanée de frappe et de pétrissage.

Le procédé d'obtention de cannelures sur un arbre selon l'invention présente ainsi l'avantage de ne nécessiter aucun enlèvement de copeaux, pour la réalisation des cannelures sur la partie extérieure d'un tube de faible épaisseur. De plus, le procédé s'effectue en une seule opération, ce qui permet d'avoir un prix de revient de l'arbre très faible, en ayant de plus un poids de la pièce le plus faible possible, ce qui est particulièrement intéressant dans le cas de l'industrie automobile.

D'autres caractéristiques et avantages de l'invention sortiront de la description qui va suivre donnée à titre d'exemples nullement limitatifs, en référence aux dessins annexés sur lesquels :
- la figure 1 est une vue longitudinale en demie coupe axiale d'un arbre ayant des cannelures obtenues suivant le procédé de l'invention ;
- la figure 2 est une coupe suivant le plan II-II de la figure 1 ;
- la figure 3 est une vue schématique transversale de la machine utilisant le procédé de l'invention, l'ensemble support interne fixe, les poussoirs, les matrices et le tube à réaliser étant en coupe ;
- la figure 4 est une vue schématique en perspective cavalière des matrices et du tube à réaliser ;
- la figure 5 est une vue longitudinale de la partie de travail d'une matrice correspondante aux figures 3 et 4 ;
- la figure 6 est une vue agrandie de l'ensemble des matrices et du tube à réaliser représentée sur la figure 3.

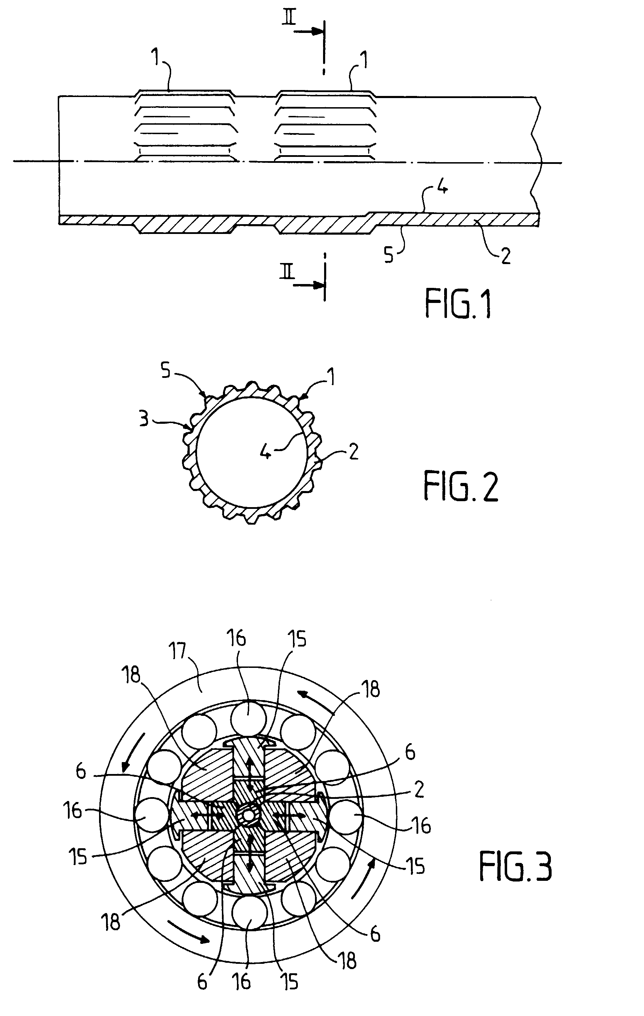

La présente invention est relative à un procédé d'obtention de cannelures sur un arbre, comme celui représenté sur les figures 1 et 2.

L'arbre est un tube 2 de faible épaisseur, avec une face extérieure 5 et une face intérieure 4. Dans l'arbre représenté, il y a deux séries de cannelures 1 ayant une profondeur 3, dont la valeur peut atteindre la moitié de l'épaisseur du tube 2. Cet arbre peut être l'élément mâle d'une colonne de direction de véhicule automobile, qui a une liaison coulissante avec l'élément femelle de ladite colonne de direction.

Le procédé d'obtention des cannelures 1 sur le tube 2 s'effectue par une déformation à froid, sans enlèvement de copeaux, qui est réalisée sur la face extérieure 5 du tube 2 de faible épaisseur. Selon une caractéristique de l'invention, cette déformation est obtenue en une seule opération.

Le but de l'invention est de réaliser des cannelures 1 sur un tube 2 de faible épaisseur afin d'alléger et de diminuer le coût de fabrication. La complexité vient dans le fait que l'épaisseur du tube 2 doit être la plus petite, en vue de l'allégement de la pièce et de la diminution du coût, tout en restant acceptable afin d'arriver à faire monter la matière pour obtenir les cannelures 1 souhaitées. Selon l'invention, la profondeur 3 des cannelures 1 peut atteindre la moitié de l'épaisseur du tube 2.

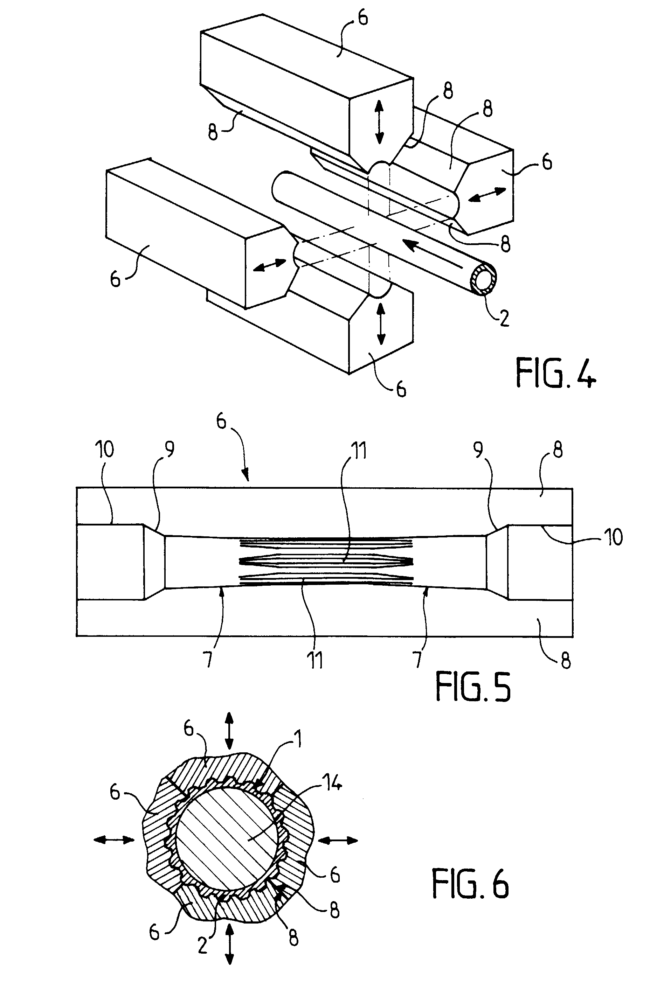

Afin de garantir la bonne qualité d'obtention des cannelures 1, pendant l'opération de martelage, la face intérieure 4 du tube 2 est soutenue par un mandrin 14 (figure 6), qui a des dimensions adaptées aux dimensions de la face intérieure 4 dudit tube 2.

Les cannelures 1 sont réalisées sur une machine schématisée sur la figure 3. La couronne extérieure 17 de cette machine étant animée d'un mouvement de rotation, le tube 2 est introduit entre des matrices 6 équi-réparties autour du tube. Le nombre des matrices 6 utilisées pour l'opération de martelage est un sous-multiple du nombre des cannelures 1 à réaliser. Dans le cas du mode de réalisation représenté sur les figures, il y a quatre matrices 6 pour réaliser seize cannelures 1 sur le tube 2.

Le tube 2 à marteler avance lentement pendant l'opération de martelage, tout en restant fixe en rotation.

La couronne extérieure 17 entraîne en rotation des rouleaux presseurs 16, qui provoquent le déplacement radial des matrices 6, à chaque passage de rouleaux presseurs 16 en face des poussoirs 15. C'est le mouvement radial alterné, qui permet de réaliser les cannelures 1 sur le tube 2 de faible épaisseur, par l'action conjuguée et simultanée de frappe et de pétrissage.

Chaque poussoir 15 est supporté et guidé par un ensemble support interne fixe 18. Chaque poussoir 15 peut coulisser et agir sur la matrice 6 correspondante, qui est montée coulissante dans l'ensemble support interne fixe 18.

La forme des matrices 6 représentées sur les figures 4, 5 et 6 a des empreintes 11 qui sont une image des cannelures 1 à réaliser. Chaque matrice 6 possède deux faces de contact 8 qui viennent en contact avec des faces de contact 8 de deux matrices adjacentes. Les empreintes 11 ont des angles d'entrée et de sortie 7, qui permettent à la matière de se déplacer librement lors de la réalisation des cannelures 1. De plus chaque matrice a une portée cylindrique 10 avec une partie conique 9 de raccordement à chacune de ses extrémités. Durant l'opération, la face intérieure 4 du tube 2 est soutenue par le mandrin 14 afin d'éviter l'affaissement de la matière.

Ainsi le procédé selon l'invention permet l'obtention de cannelures 1 sur un arbre, par déformation à froid sans enlèvement de copeaux sur la face extérieure 5 d'un tube 2 de faible épaisseur. Le procédé s'effectue sur une machine, qui comporte une couronne extérieure 17 animée d'un mouvement de rotation. La couronne extérieure 17 entraîne des rouleaux presseurs 16, qui agissent sur des poussoirs 15. Les poussoirs 15 sont supportés et guidés par un ensemble support interne fixe 18, dans lequel chaque poussoir 15 peut coulisser et agir sur la matrice 6 correspondante. Chaque matrice 6 et le poussoir correspondant 15 sont montés coulissants dans l'ensemble support interne fixe 18. A chaque passage d'un rouleau presseur 16 sur un poussoir 15, ledit rouleau presseur 16 provoque le déplacement radial du poussoir 15 et de la matrice 6 correspondante, afin que le mouvement radial alterné de chacune des matrices 6 permette de réaliser les cannelures 1 sur le tube 2 de faible épaisseur. Cette réalisation s'obtient par l'action conjuguée et simultanée de frappe et de pétrissage. Le tube 2 est introduit entre les matrices 6 lorsque la couronne extérieure 17 tourne, et le tube 2 avance lentement pendant l'opération de martelage tout en restant fixe en rotation, et en étant soutenu par un mandrin 14.

## Revendications

1. Procédé d'obtention de cannelures (1) sur un arbre, caractérisé en ce que :
- la déformation à froid sans enlèvement de copeaux s'effectue sur la face extérieure (5) d'un tube (2) de faible épaisseur ;
- la déformation est réalisée par martelage de la face extérieure en une seule opération par l'action conjuguée et simultanée de frappe et de pétrissage ;
- la profondeur (3) des cannelures (1) peut atteindre la moitié de l'épaisseur du tube (2) ;
- pendant l'opération de martelage, la face intérieure (4) du tube (2) est soutenue par un mandrin (14) ayant des dimensions adaptées à la face intérieure (4) dudit tube (2).

2. Procédé selon la revendication 1, caractérisé en ce que le martelage utilise un nombre de matrices (6) qui est un sous-multiple du nombre de cannelures (1) à réaliser.

3. Procédé selon la revendication 2, caractérisé en ce que la forme de chaque matrice (6) a des empreintes (11) qui sont une image des cannelures (1) à réaliser, les empreintes (11) ayant des angles d'entrée et de sortie (7).

4. Procédé d'obtention de cannelures (1) sur un arbre, par déformation à froid sans enlèvement de copeaux sur la face extérieure (5) d'un tube (2) de faible épaisseur selon l'une quelconque des revendications 1 à 3, caractérisé en ce que le procédé s'effectue sur une machine comportant une couronne extérieure (17) animée d'un mouvement de rotation, qui entraîne des rouleaux presseurs (16), lesdits rouleaux presseurs (16) agissent sur des poussoirs (15) supportés et guidés par un ensemble support interne fixe (18), dans lequel chaque poussoir (15) peut coulisser et agir sur la matrice (6) correspondante montée coulissante dans l'ensemble fixe (18) de manière qu'à chaque passage d'un rouleau presseur (16) sur un poussoir (15), ledit rouleau presseur (16) provoque le déplacement radial dudit poussoir (15) et de la matrice (6) correspondante, afin que le mouvement radial alterné de chacune des matrices (6) permette de réaliser les cannelures (1) sur le tube (2) de faible épaisseur par l'action conjuguée et simultanée de frappe et de pétrissage, ledit tube (2) étant introduit entre les matrices (6) lorsque la couronne extérieure (17) tourne, et avançant lentement pendant l'opération de martelage en restant fixe en rotation, et en étant soutenu par un mandrin (14).
